# EUROPÄISCHE PATENTSCHRIFT

(11) **EP 2 863 184 B1**
(45) Veröffentlichungstag und Bekanntmachung des Hinweises auf die Patenterteilung: **23.09.2015**
(21) Anmeldenummer: 13189520.3
(22) Anmeldetag: 21.10.2013
(51) Int. Cl.: G01D 5/20, G01D 5/14, G01D 5/244

(54) **Drehgeber mit autarker Energieversorgung**
Rotary encoder having a self-sufficient energy supply
Capteur de rotation avec alimentation autonome en énergie

(43) Veröffentlichungstag der Anmeldung: 22.04.2015
(73) Patentinhaber: SICK STEGMANN GmbH, 78166 Donaueschingen (DE)
(72) Erfinder: Basler, Stefan, 78086 Brigachtal (DE); Mutschler, Reinhold, 78056 Villingen-Schwenningen (DE); Dilger, Dominik, 78132 Hornberg (DE)
(74) Vertreter: Ludewigt, Christoph

(56) Entgegenhaltungen:
- EP-A2- 2 159 547
- EP-A2- 2 221 587
- WO-A1-2006/081873
- DE-A1-102007 039 050

## Beschreibung

Die vorliegende Erfindung betrifft einen Drehgeber zum Erfassen von Informationen einer rotierenden Welle.

Aus der EP 2 159 547 A2 ist ein Drehgeber gemäß dem Oberbegriff des unabhängigen Anspruchs 1 bekannt.

Herkömmliche Drehgeber dienen dazu, Messgrößen wie Winkelstellung, Drehzahl, Drehrichtung und/oder Winkelbeschleunigung einer rotierenden Welle eines Antriebes zu erfassen und an eine Steuerung zum Steuern bzw. Regeln des Antriebes zu übermitteln. Hierbei können die Drehgeber auch dazu genutzt werden, die erfassten Messgrößen zwischen zu speichern und über eine statistische Auswertung eine Zustandsüberwachung durchzuführen.

Bei einer derartigen Zustandsüberwachung werden in der Regel nicht die einzelnen Messwerte, sondern deren Histogramm oder statistische Verteilung über die Zeit ausgegeben, wodurch eine Datenkompression erreicht wird. In der Regel werden die erfassten Messgrößen als elektrisch codierte Signale drahtgebunden an die Steuerung übermittelt, wobei ein hoher Verdrahtungsaufwand sich daraus ergibt.

Zusätzlich zu der Verdrahtung für die Kommunikation erfordert die Energieversorgung des Drehgebers zum Erfassen und Zwischenspeichern der Messgrößen weitere Verdrahtung, wodurch das Verdrahtungsproblem verstärkt wird.

Um diesem Problem entgegenzuwirken, werden kabellose Drehgeber zur Verfügung gestellt, die ihre Energieversorgung durch Primärbatterien oder durch mittels Generatoren aufladbare Energiespeicher abdecken.

Drehgeber mit Primärbatterien zur Energieversorgung haben den Nachteil, dass die Primärbatterien gewechselt werden müssen, wodurch die Drehgeber wartungsintensiv und somit teuer sind.

Ein Drehgeber mit autarker Energieversorgung, die keine Primärbatterien verwendet, ist z.B. aus der dem Anmelder eigenen Europäischen Offenlegungsschrift EP 2 562 512 A1 bekannt.

Hierbei weist der Drehgeber eine Energieversorgungseinheit auf, die einen Generator und erforderliche Elektronikkomponente, wie z.B. Spannungswandler und Energiespeicher, aufweist.

Der Drehgeber hat den Nachteil, dass die Bauform des Generators nur mit großem Aufwand an den vorhandenen Bauraum eines Drehgebers angepasst werden kann und der Drehgeber durch die zusätzlichen Bauteile auch teuer ist.

Es ist eine Aufgabe der vorliegenden Erfindung, einen Drehgeber gemäß dem Oberbegriff des unabhängigen Anspruchs 1 derart zu verbessern, dass der Drehgeber trotz autarker Energieversorgung kompakt ist und eine verbesserte Spannungsversorgung aufweist.

Die Aufgabe wird erfindungsgemäß durch einen Drehgeber mit den Merkmalen des unabhängigen Anspruchs 1 gelöst.

Durch die integrierte Anordnung der Elemente der verschiedenen Einheiten ist eine kompakte Anordnung bzw. ein kompakter Aufbau des Drehgebers möglich. Zusätzlich kann die derart aufgebaute Energieerzeugungseinheit Gebern mit unterschiedlichen Bauformen leicht angepasst und eingebaut werden.

Vorteilhafterweise ist das Magnetelement als Ringmagnet, Scheibenmagnet oder eine Mehrzahl von Einzelmagneten mit wechselnder Polungsausrichtung ausgebildet.

Gemäß einem weiteren Ausführungsbeispiel besteht das zweite Element der Energieerzeugungseinheit aus zumindest einer Spule, die in SMD-Bauform oder als, insbesondere mehrlagige, Planarspule ausgebildet ist, wobei die Spule auf die Leiterplatte bestückt oder in die Leiterplatte integriert eingearbeitet ist. Hierbei steht die Abkürzung SMD für die fachmännische Bezeichnung "Suface Mounted Device". D.h. die Spule ist derart aufgebaut, dass sie auf die Oberfläche eines Elektronikelements, insbesondere der Leiterplatte, montiert werden kann. Hierdurch können zusätzliche Komponenten, wie z.B. einen separaten Generator, eingespart werden.

Vorteilhafterweise sind jeweils zwei oder mehrere Spulen um ein Eineindrittel (1 1/3) einer Polteilung versetzt angeordnet. Durch die versetzte Anordnung und die unter Berücksichtigung der Polung daraus resultierende Reihen- oder Parallelschaltung der Spulen kann eine Anforderung nach höherer Spannung oder geringeren Innenwiderstand erfüllt werden. Durch eine geeignete Anordnung und Verschaltung kann eine Spannung mit drei oder mehr Phasen erzeugt werden, die nach einer Gleichrichtung eine Gleichspannung mit relativ geringer Welligkeit ergibt.

Es ist weiterhin vorteilhaft SMD-Spulen zu verwenden, wodurch eine sehr flexible Anordnung möglich ist. Geeignete Spulen weisen einen Durchmesser von 3 mm bei einer Induktivität von mehr als 1 mH (Milli-Henry) auf. Für die mechanische Anordnung sind dabei ungeschirmte Spulen besonders vorteilhaft.

Gemäß einem weiteren Ausführungsbeispiel ist eine mehrlagige Planarspule direkt in die Leiterplatte integriert, wobei Lagen von Ferritmaterial in die Leiterplatte eingebettet sind und/oder um die Planarspule Kupferflächen eingebracht sind. Durch das Vorsehen der Lagen von Ferritmaterial in der Leiterplatte kann die Wirksamkeit der mehrlagigen Planarspulen verbessert werden, wobei die Kupferflächen wiederum als Abschirmung dienen und verhindern, dass sich durch die drehenden Magnete erzeugte Wirbelströme störend auf die übrige Schaltung auswirken.

Gemäß einem weiteren Ausführungsbeispiel weist die Signalgebereinheit einen auf der Welle befestigten Halter und eine optisch, kapazitiv oder induktiv abtastbare Maßverkörperung auf, wobei die Maßverkörperung auf einer die Signalauswerteeinheit zugewandten Seite des Halters befestigt ist. Vorteilhafterweise ist die Maßverkörperung aus dem ersten Element der Energieerzeugungseinheit gebildet. Hierdurch können weitere zusätzliche Komponenten eingespart werden. Insbesondere wird durch den integrierten Aufbau der Energieerzeugungseinheit in die Signalgeber- und Signalerfassungseinheit, durch die Verwendung der Funktionselemente der Signalgeber- und Signalerfassungseinheit für die Energieerzeugungseinheit, eine kompakte Gestaltung des Drehgebers ermöglicht.

Gemäß einem weiteren Ausführungsbeispiel besteht die Signalerfassungseinheit aus zumindest einem Magnetfeldsensor oder aus in die Leiterplatte angeordneten Leiterbahnen, wobei die Leiterbahnen eine Wechselwirkung mit dem ersten Element der Energieerzeugungseinheit, insbesondere dem Magnetelement, aufweisen können.

Ferner ist es vorteilhaft, dass das zweite Element der Energieerzeugungseinheit an einer ersten Seite auf einem Träger aufgebracht ist, welcher einen magnetischen Rückschluss darstellt, und an einer die erste Seite gegenüberliegenden zweiten Seite auf einem Flex-Verbinder angeordnet ist, und wobei der Flex-Verbinder mit der Leiterplatte elektrisch verbunden ist und als Schaltungsträger für das zweite Element dient.

Gemäß einem weiteren Ausführungsbeispiel sind der Magnetfeldsensor und die Maßverkörperung fluchtend auf einer Mittelachse der Welle angeordnet und das erste und zweite Element der Energieerzeugungseinheit radial von der Mittelachse beabstandet angeordnet.

Gemäß einem weiteren Ausführungsbeispiel weist die Signalauswerteeinheit eine Gleichrichterschaltung, um eine von der Energieerzeugungseinheit generierte Wechselspannung gleichzurichten, und einen Energiespeicher zum Speichern einer von der Energieerzeugungseinheit erzeugten elektrischen Energie auf.

Gemäß einem weiteren Ausführungsbeispiel weist die Signalauswerteeinheit eine Zustandsüberwachungseinheit und eine, insbesondere drahtlose, Kommunikationseinheit auf, um von der Signalerfassungseinheit erfasste Daten an eine Steuerung zu kommunizieren.

Ferner weist die Signalgebereinheit gemäß einem weiteren Ausführungsbeispiel ein auf der Welle befestigtes Getriebe auf, wobei das erste Element der Energieerzeugungseinheit an einem Getriebeelement, insbesondere einem Planetenträger, des Getriebes angebracht ist, so dass das an dem Getriebeelement angebrachte erste Element der Energieerzeugungseinheit dem zweiten Element der Energieerzeugungseinheit gegenüberliegend angeordnet ist.

Hierdurch wird trotz einer geringen Drehzahl der Welle eine hohe Drehzahl des ersten Elements, insbesondere des Magneten, der Energieerzeugungseinheit durch das Getriebe erzielt, so dass genügend Energie für den Drehgeber erzeugt werden kann. Dieses Ausführungsbeispiel eignet sich besonders für Drehgeber, die typischerweise bei niedrigen Drehzahlen eingesetzt werden. Andererseits wird dadurch eine maximal zulässige Drehzahl begrenzt.

Es ergibt sich erfindungsgemäß ein sehr kompakter Aufbau des Drehgebers, der sowohl eine autarke Energieversorgung als auch drahtlose Kommunikation der erfassten Daten aufweist.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnungen im Einzelnen erläutert. In den Zeichnungen zeigen:
- Fig. 1: eine schematische Darstellung der Kernelemente eines erfindungsgemäßen Drehgebers;
- Fig. 2: eine schematische Detailansicht einer erfindungsgemäßen Ausführungsform der Energieerzeugungseinheit;
- Fig. 3: eine schematische Darstellung einer Ausführungsform eines erfindungsgemäßen Drehgebers;
- Fig. 4: eine schematische Darstellung einer weiteren Ausführungsform eines erfindungsgemäßen Drehgebers;
- Fig. 5: eine schematische Darstellung einer weiteren Ausführungsform eines erfindungsgemäßen Drehgebers.

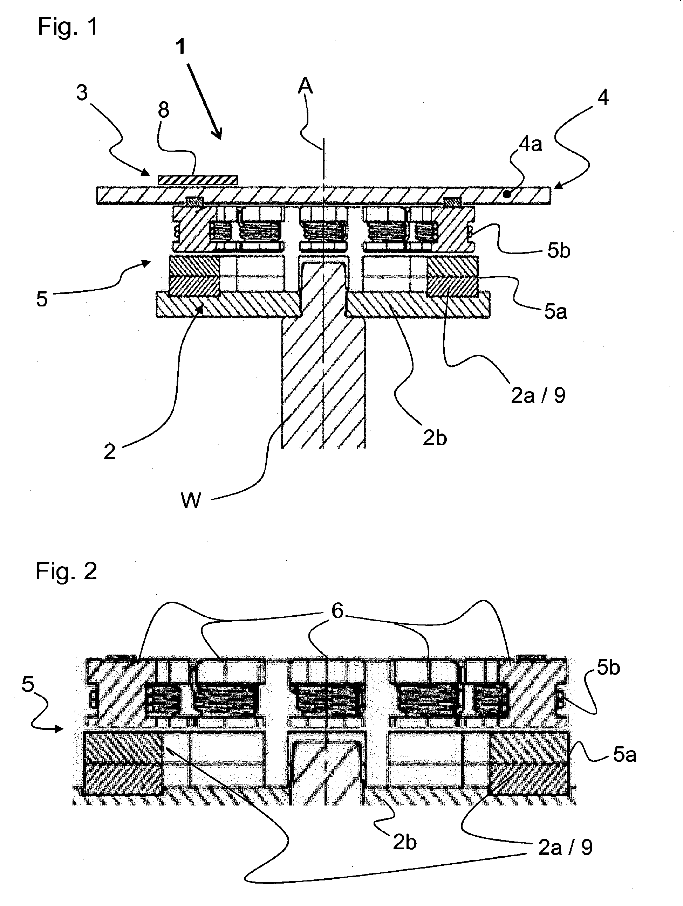

In Figur 1 ist eine schematische Darstellung der Kernelemente eines erfindungsgemäßen Drehgebers (1) zum Erfassen von Informationen einer rotierenden Welle (W) gezeigt, der eine Signalgebereinheit (2), eine Signalerfassungseinheit (3), eine Signalauswerteeinheit (4) und eine Energieerzeugungseinheit (5) aufweist.

Hierbei ist die Signalgebereinheit (2) an der Welle (W) befestigt. Die Signalerfassungseinheit (3) ist in axiale Richtung der Welle (W) der Signalgebereinheit (2) gegenüberliegend angeordnet. Die Signalauswerteeinheit (4) weist eine Leiterplatte (4a) auf, die in axiale Richtung beabstandet zu der Welle (W) angeordnet ist. Die Signalerfassungseinheit (3) besteht aus zumindest einem Magnetfeldsensor (8) oder aus in die Leiterplatte (4a) angeordneten Leiterbahnen, wobei die Leiterbahnen eine Wechselwirkung mit einem ersten Element (5a) der Energieerzeugungseinheit (5) aufweisen.

Zwischen der Signalgebereinheit (2) und der Signalerfassungseinheit (4) ist die Energieerzeugungseinheit (5) zum Erzeugen von elektrischer Energie für den Drehgeber (1) angeordnet, wobei die Energieerzeugungseinheit (5) aus dem ersten Element (5a), das an der Signalgebereinheit (2) vorgesehen ist, und einem zweiten Element (5b), das auf der Leiterplatte (4a) der Signalauswerteeinheit (4) vorgesehen ist, besteht. Das erste Element (5a) der Energieerzeugungseinheit (5) besteht wiederum aus zumindest einem axial mehrpolig beidseitig oder mehrpolig einseitig magnetisierten Magnetelement (2a), wobei vorteilhafterweise das Magnetelement (2a) als Ringmagnet, Scheibenmagnet oder eine Mehrzahl von Einzelmagneten mit wechselnder Polungsausrichtung ausgebildet ist.

Die Signalgebereinheit (2) besteht aus einem Halter (2b), der auf die Welle (W) montiert ist, und aus einer optisch, kapazitiv oder induktiv abtastbaren Maßverkörperung (9), wobei die Maßverkörperung (9) auf einer die Signalauswerteeinheit (4) zugewandten Seite des Halters (2b) befestigt ist. Der Halter (2b) ist vorteilhafterweise als magnetisch leitender Magnethalter ausgebildet, so dass er als magnetischer Rückschluss dienen kann, um unerwünschte Wechselwirkungen mit eventuell im Drehgeber (1) verwendeten Kugellager zu vermeiden.

Die Maßverkörperung (9) wird üblicherweise optisch, kapazitiv oder induktiv von der Signalerfassungseinheit (3) abgetastet, woraus die Informationen der rotierenden Welle (W) bzgl. Drehwinkel, Drehgeschwindigkeit, Drehrichtung, Winkelbeschleunigung, Anzahl der Drehungen oder dergleichen abgeleitet werden.

Erfindungsgemäß ist die Maßverkörperung (9) aus dem ersten Element (5a) der Energieerzeugungseinheit (5) gebildet, so dass in einem Ausführungsbeispiel das Magnetelement (2a) die Maßverkörperung (9) der Signalgebereinheit (2) darstellt.

Das zweite Element (5b) der Energieerzeugungseinheit (5) besteht aus zumindest einer Spule (6), die in SMD-Bauform oder als, insbesondere mehrlagige, Planarspule ausgebildet ist. Als SMD-Bauform, d.h. "Surface Mounted Device" Bauelement, kann die zumindest eine Spule (6) auf die Leiterplatte (4a) der Signalauswerteeinheit (4) bestückt sein. Als insbesondere mehrlagige Planarspule wird die zumindest eine Spule (6) in die Leiterplatte (4a) integriert. Hierbei können Lagen von Ferritmaterial in die Leiterplatte (4a) eingebettet sein, so dass die Wirkung der Planarspule verstärkt wird. Zusätzlich kann es vorteilhaft sein, um die Planarspule Kupferflächen in der Leiterplatte (4a) vorzusehen, so dass sich durch das drehende erste Element (5a) der Energieerzeugungseinheit (5) bzw. Magnetelement (2a) der Signalgebereinheit (2) erzeugte Wirbelströme nicht störend auf die übrige Schaltung auswirken.

Wie in Figur 2 gezeigt, besteht das zweite Element (5b) der Energieerzeugungseinheit (5) erfindungsgemäß aus mehreren Spulen (6), die derart angeordnet sind, dass jeweils zwei oder mehrere Spulen (6) um eine Polteilung oder ein Vielfaches einer Polteilung des Magnetelements (2a) versetzt sind. Vorteilhafterweise können die Spulen (6) unter Berücksichtigung der Polung in Reihe oder parallel geschaltet werden, so dass entsprechend einer Anforderung eine höhere Spannung oder ein geringerer Innenwiderstand ermöglicht werden kann. Durch eine geeignete Anordnung und Verschaltung kann eine Spannung mit drei oder mehr Phasen erzeugt werden, die nach einer Gleichrichtung eine Gleichspannung mit relativ geringer Welligkeit ergibt.

Bei einer Drehung der Welle (W) induziert das erste Elemente (5a) der Energieerzeugungseinheit (5) bzw. das Magnetelement (2a) der Signalgebereinheit (2) eine Spannung in dem zweiten Element (5b) bzw. in den Spulen (6) der Energieerzeugungseinheit (5), so dass eine Wechselspannung erzeugt wird. Die generierte Wechselspannung wird mittels einer Gleichrichterschaltung der Signalauswerteeinheit (4) gleichgerichtet und in elektrische Energie umgewandelt, so dass die elektrische Energie dem Drehgeber (1) zur Verfügung gestellt oder in einem Energiespeicher gespeichert werden kann.

Da das erste Elemente (5a) der Energieerzeugungseinheit (5) bzw. das Magnetelement (2a) der Signalgebereinheit (2) gemäß einem Ausführungsbeispiel gleichzeitig die Maßverkörperung (9) der Signalgebereinheit (2) darstellt, wird der zumindest eine Magnetfeldsensor (8) durch die Drehung stimuliert, so dass Ausgangssignale erfasst werden können, die die Messgrößen Drehwinkel, Drehgeschwindigkeit, Drehrichtung, Winkelbeschleunigung, Anzahl der Drehung der Welle (W) oder dergleichen darstellen.

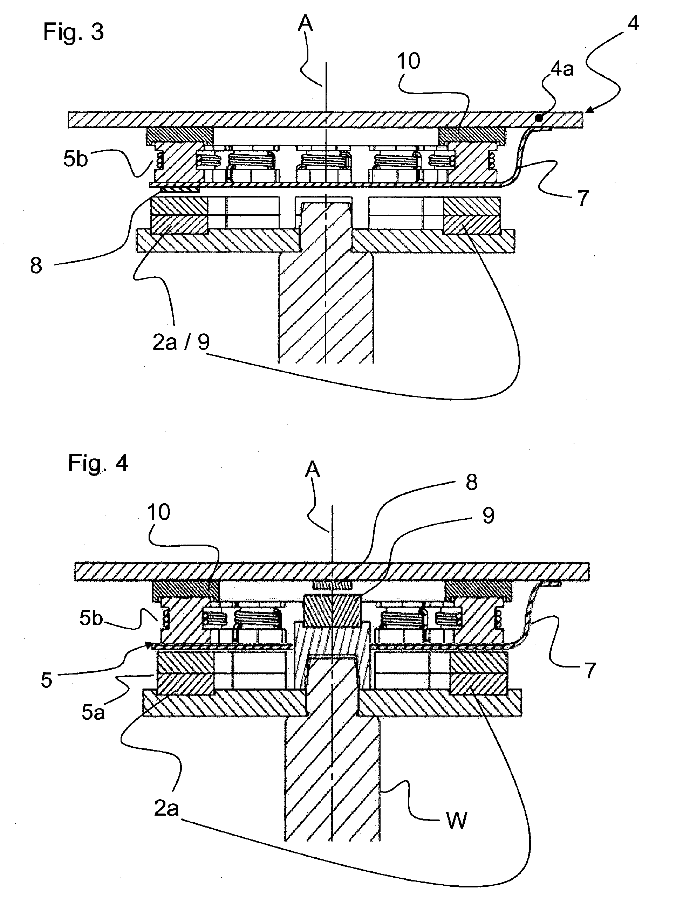

In dem in Figur 3 gezeigten Ausführungsbeispiel des erfindungsgemäßen Drehgebers (1) ist das zweite Element (5b) der Energieerzeugungseinheit (5) an einer ersten Seite mittels eines Trägers (10) mit der Leiterplatte (4a) der Signalauswerteeinheit (4) verbunden, so dass der Träger (10) einen magnetischen Rückschluss bildet. An einer der ersten Seite gegenüberliegenden zweiten Seite ist das zweite Element (5b) auf einem Flex-Verbinder (7) angeordnet, wobei der Flex-Verbinder (7) mit der Leiterplatte (4a) elektrisch verbunden ist und als Schaltungsträger für das zweite Element (5b) dient.

Hierbei ist der Magnetfeldsensor (8) auf der Seite des Flex-Verbinders (7) angeordnet, die der Seite gegenüberliegt, auf der das zweite Element (5b) angeordnet ist. Hierdurch sind der Magnetfeldsensor (8) und das erste Element (5a) der Energieerzeugungseinheit (5) bzw. das Magnetelement (2a) der Signalgebereinheit (2) unmittelbar gegenüber angeordnet, so dass die erfassten Ausgangssignale auch ohne eine Verstärkung stark genug für die Auswertung sind.

Eine Weiterbildung des beschriebenen Ausführungsbeispiels in der Figur 3 ist in der Figur 4 dargestellt, wobei im Gegensatz zum Ausführungsbeispiel in der Figur 3 der Magnetfeldsensor (8) und die Maßverkörperung (9) der Signalgebereinheit (2) fluchtend auf einer Mittelachse (A) der Welle (W) angeordnet sind. Das erste und zweite Element (5a,5b) der Energieerzeugungseinheit (5) sind radial von der Mittelachse (A) beabstandet angeordnet. Hierdurch ist eine eindeutige Bestimmung der absoluten Position der Welle (W) gegeben. D.h. eine Bestimmung einer eindeutigen Winkelinformation über 360° ist möglich, trotz der Verwendung von mehreren Einzelmagneten oder eines mehrpoligen Magneten zu gleichzeitiger Energieerzeugung und Signalgenerierung für die Positionsbestimmung. Ferner wird durch die Nutzung einer separaten Maßverkörperung (9) und eines separaten Magnetelements (2a) ein möglicher Störeinfluss der magnetischen Felder auf die Signalauswertung verringert.

Weiterhin weist die Signalauswerteeinheit (4) eine Gleichrichterschaltung auf, die eine von der Energieerzeugungseinheit (5) generierte Wechselspannung gleichrichtet. Die erzeugte elektrische Energie kann in einem Energiespeicher gespeichert werden, der ebenfalls der Signalauswerteeinheit (4) zugeordnet ist. Diese Elemente können auf der Leiterplatte (4a) oder örtlich nah zu der Signalauswerteeinheit (4) angeordnet sein, so dass eine kompakte Gestaltung des Drehgebers (1) ermöglicht ist.

Zusätzlich können Komponente, wie eine Zustandsüberwachungseinheit und eine, insbesondere drahtlose, Kommunikationseinheit an der Signalauswerteeinheit (4) vorgesehen sein, so dass erfasste Daten oder deren statistische Auswertung von der Signalerfassungseinheit (3) an eine nicht gezeigte Steuerung übertragen werden können, wobei die Energieversorgung der Einheiten des Drehgebers (1) durch die Energieerzeugungseinheit (5) gewährleistet ist.

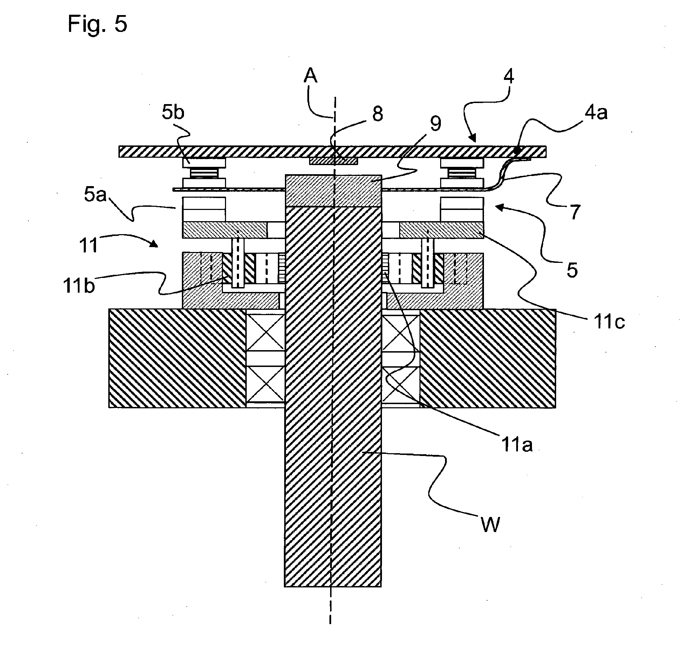

In der Figur 5 ist schematisch ein weiteres Ausführungsbeispiel eines erfindungsgemäßen Drehgebers (1) gezeigt, wobei auf der Welle (W) ein Getriebe (11) vorgesehen ist. Das Getriebe (11) weist antriebseitig ein Sonnenrad (11a) auf, das ein Planetenrad (11b) antreibt. Das Planetenrad (11b) ist mit einem Planetenträger (11 c) fest verbunden, so dass der Planetenträger (11 c) als Abtrieb des Getriebes (11) dient.

Hierbei stellt das auf der Welle (W) befestigte Getriebe (11) ein Teil der Signalgebereinheit (2) dar, wobei das erste Element (5a) der Energieerzeugungseinheit (5) an einem Getriebeelement, insbesondere dem Planetenträger (11 c), des Getriebes (11) angebracht ist, so dass das an dem Getriebeelement angebrachte erste Element (5a) der Energieerzeugungseinheit (5) dem zweiten Element (5b) der Energieerzeugungseinheit (5) gegenüberliegend angeordnet ist.

Der Planetenträger (11c) mit dem ersten Element (5a) der Energieerzeugungseinheit (5) ist der Leiterplatte (4a) der Signalauswerteeinheit (4) gegenüberliegend angeordnet, so dass das mittels des Flex-Verbinders (7) an die Leiterplatte (4a) angebrachte zweite Element (5b), d.h. die Spulen (6), der Energieerzeugungseinheit (5) koaxial mit dem ersten Element (5a) ist. Die Maßverkörperung (9) ist an der Welle (W) befestigt und dem Magnetfeldsensor (8) ebenfalls koaxial gegenüberliegend angeordnet.

Wenn die Welle (W) sich dreht, treibt das Sonnenrad (11a) des Getriebes (11) das Planetenrad (11 b) an, so dass der mit dem Planetenrad (11 b) fest verbundene Planetenträger (11 c) das auf dem Planetenträger (11 c) angeordnete erste Element (5a) der Energieerzeugungseinheit (5) mit einer Drehzahl entsprechend einer Übersetzung des Getriebes (11) dreht, die höher ist als die Drehzahl der Welle (W) selbst.

Hierdurch wird trotz einer geringen Drehzahl der Welle (W) eine hohe Drehzahl des ersten Elements (5a), insbesondere des Magnetelements (2a), der Energieerzeugungseinheit (5) durch das Getriebe (11) erzielt, so dass genügend Energie für den Drehgeber (1) erzeugt werden kann. Dieses Ausführungsbeispiel eignet sich besonders für Drehgeber (1), die typischerweise bei niedrigen Drehzahlen eingesetzt werden. Andererseits wird dadurch eine maximal zulässige Drehzahl begrenzt.

### Bezugszeichenliste

| | | | |
|---|---|---|---|
| 1 | Drehgeber | A | Mittelachse |
| 2 | Signalgebereinheit | W | Welle |
| 2a | Magnetelement | | |
| 2b | Halter | | |
| 3 | Signalerfassungseinheit | | |
| 4 | Signalauswerteeinheit | | |
| 4a | Leiterplatte | | |
| 5 | Energieerzeugungseinheit | | |
| 5a | erstes Element | | |
| 5b | zweites Element | | |
| 6 | Spule | | |
| 7 | Flex-Verbinder | | |
| 8 | Magnetfeldsensor | | |
| 9 | Maßverkörperung | | |
| 10 | Träger | | |
| 11 | Getriebe | | |
| 11a | Sonnenrad | | |
| 11b | Planetenrad | | |
| 11c | Planetenträger | | |

## Patentansprüche

1. Drehgeber (1) zum Erfassen von Informationen einer rotierenden Welle (W) mit einer Signalgebereinheit (2), die an der Welle (W) befestigt ist, einer Signalerfassungseinheit (3), die in axiale Richtung der Welle (W) gegenüberliegend der Signalgebereinheit (2) angeordnet ist, einer Signalauswerteeinheit (4), die eine zu der Welle (W) in axiale Richtung beabstandet angeordnete Leiterplatte (4a) aufweist, und einer Energieerzeugungseinheit (5) zum Erzeugen von elektrischer Energie für den Drehgeber (1), wobei die Energieerzeugungseinheit (5) aus einem ersten an der Signalgebereinheit (2) vorgesehenen Element (5a) und aus einem zweiten auf der Leiterplatte (4a) der Signalauswerteeinheit (4) angeordneten Element (5b) besteht, und wobei das erste und zweite Element (5a, 5b) sich gegenüberliegend angeordnet sind, **dadurch gekennzeichnet, dass** das erste Element (5a) der Energieerzeugungseinheit (5) aus zumindest einem axial mehrpolig beidseitig oder mehrpolig einseitig magnetisierten Magnetelement (2a) besteht, und
dass das zweite Element (5b) der Energieerzeugungseinheit (5) aus mehreren Spulen (6) besteht, die derart angeordnet sind, dass jeweils zwei oder mehrere Spulen (6) um eine Polteilung oder ein Vielfaches einer Polteilung versetzt sind, und dass die Spulen (6) parallel, in Reihe oder in Gruppen geschaltet sind,
wobei die Spulen (6) senkrecht zu der Leiterplatte (4a) ausgerichtet sind.

2. Drehgeber (1) nach Anspruch 1, **dadurch gekennzeichnet, dass** das Magnetelement (2a) als Ringmagnet, Scheibenmagnet oder eine Mehrzahl von Einzelmagneten mit wechselnder Polungsausrichtung ausgebildet ist.

3. Drehgeber (1) nach zumindest einem der vorhergehenden Ansprüche, **dadurch gekennzeichnet, dass** das zweite Element (5b) der Energieerzeugungseinheit (5) aus zumindest einer Spule (6) besteht, die in SMD-Bauform oder als, insbesondere mehrlagige, Planarspule ausgebildet ist, wobei die Spule (6) auf die Leiterplatte (4a) bestückt oder in die Leiterplatte (4a) integriert eingearbeitet ist.

4. Drehgeber (1) nach Anspruch 3, **dadurch gekennzeichnet, dass** die, insbesondere mehrlagige, Planarspule direkt in die Leiterplatte (4a) integriert ist, und wobei Lagen von Ferritmaterial in die Leiterplatte (4a) eingebettet sind und/oder um die Planarspule Kupferflächen eingebracht sind.

5. Drehgeber (1) nach zumindest einem der vorhergehenden Ansprüche, **dadurch gekennzeichnet, dass** die Signalgebereinheit (2) einen auf der Welle (W) befestigten Halter (2b) und eine optisch, kapazitiv oder induktiv abtastbare Maßverkörperung (9) aufweist, wobei die Maßverkörperung (9) auf einer der Signalauswerteeinheit (4) zugewandten Seite des Halters (2b) befestigt ist.

6. Drehgeber (1) nach Anspruch 5, **dadurch gekennzeichnet, dass** die Maßverkörperung (9) aus dem ersten Element (5a) der Energieerzeugungseinheit (5) gebildet ist.

7. Drehgeber (1) nach zumindest einem der vorhergehenden Ansprüche, **dadurch gekennzeichnet, dass** die Signalerfassungseinheit (3) aus zumindest einem Magnetfeldsensor (8) und/oder aus in die Leiterplatte (4a) angeordneten Leiterbahnen besteht, wobei die Leiterbahnen eine Wechselwirkung mit dem ersten Element (5a) der Energieerzeugungseinheit (5) aufweisen.

8. Drehgeber (1) nach zumindest einem der vorhergehenden Ansprüche, **dadurch gekennzeichnet, dass** das zweite Element (5b) der Energieerzeugungseinheit (5) an einer ersten Seite auf einem Träger (10) aufgebracht ist, welcher einen magnetischen Rückschluss darstellt und mit der Leiterplatte (4a) verbunden ist, und an einer der ersten Seite gegenüberliegenden zweiten Seite auf einem Flex-Verbinder (7) angeordnet ist, und wobei der Flex-Verbinder (7) mit der Leiterplatte (4a) elektrisch verbunden ist und als Schaltungsträger für das zweite Element (5b) dient.

9. Drehgeber (1) nach Anspruch 7 oder 8, **dadurch gekennzeichnet, dass** der Magnetfeldsensor (8) und die Maßverkörperung (9) fluchtend auf einer Mittelachse (A) der Welle (W) angeordnet sind und das erste und zweite Element (5a, 5b) der Energieerzeugungseinheit (5) radial von der Mittelachse (A) beabstandet angeordnet sind.

10. Drehgeber (1) nach zumindest einem der vorhergehenden Ansprüche, **dadurch gekennzeichnet, dass** die Signalauswerteeinheit (4) eine Gleichrichterschaltung, um eine von der Energieerzeugungseinheit (5) generierte Wechselspannung gleichzurichten, und einen Energiespeicher zum Speichern einer von der Energieerzeugungseinheit (5) erzeugten elektrischen Energie aufweist.

11. Drehgeber (1) nach zumindest einem der vorhergehenden Ansprüche, **dadurch gekennzeichnet, dass** die Signalauswerteeinheit (4) eine Zustandsüberwachungseinheit und eine, insbesondere drahtlose, Kommunikationseinheit aufweist, um von der Signalerfassungseinheit (3) erfasste Daten an eine Steuerung zu kommunizieren.

12. Drehgeber (1) nach zumindest einem der vorhergehenden Ansprüche, **dadurch gekennzeichnet, dass** die Signalgebereinheit (2) ein auf der Welle (W) befestigtes Getriebe (11) aufweist und das erste Element (5a) der Energieerzeugungseinheit (5) an einem Getriebeelement, insbesondere einem Planetenträger (11c), des Getriebes (11) angebracht ist, so dass das an dem Getriebeelement angebrachte erste Element (5a) der Energieerzeugungseinheit (5) dem zweiten Element (5b) der Energieerzeugungseinheit (5) gegenüberliegend angeordnet ist.

## Claims

1. Encoder (1) for detecting information of a rotating shaft (W) with a signal generator unit (2) which is fixed to the shaft (W), a signal detection unit (3), which is arranged in axial direction of the shaft (W) opposite to the signal generator unit (2), a signal evaluation unit (4) having a printed circuit board (4a) spaced in axial direction to the shaft (W), and a power generating unit (5) for generating electric power for the rotary encoder (1), wherein the power generating unit (5) consists of a first element (5a) arranged at the signal transmitter unit (2) and a second element (5b) provided on the circuit board (4a) of the signal evaluation unit (4), and wherein the first and second elements (5a, 5b) are arranged opposite one another, **characterized in that** the first element (5a) of the power generating unit (5) comprises at least one axially magnetized multipolar both sided or multipolar one sided magnetized magnetic element (2a), and that the second element (5b) of the power generating unit (5) consists of several coils (6), which are arranged such that in each case two or more coils (6) are offset by one pole pitch or a multiple of a pole pitch, and **in that** the coils (6) are connected in series, in parallel or in groups, wherein the coils (6) are oriented perpendicularly to the printed circuit board (4a).

2. Encoder (1) according to claim 1, **characterized in that** the magnetic element (2a) is formed as a ring magnet, magnetic disc or a plurality of individual magnets of alternating polarity.

3. Encoder (1) according to at least one of the preceding claims, **characterized in that** the second element (5b) of the power generating unit (5) is made of at least one coil (6), which is fomed in SMD design or formed as a planar coil, in particular as a multi-layer planar coil, wherein the coil (6) is equipped on the printed circuit board (4a) or integrally incorporated in the printed circuit board (4a).

4. Encoder (1) according to claim 3, **characterized in that** the particular multilayer planar coil is directly integrated into the printed circuit board (4), and wherein layers of ferrite material are embedded in the printed circuit board (4) and / or copper surfaces are introduced around the planar coil.

5. Encoder (1) according to at least one of the preceding claims, **characterized in that** the signal generator unit (2) has a holder (2b) attached on the shaft (W) and an optically, capacitively or inductively scannable measuring scale (9) wherein the measuring scale (9) is attached on one of the signal evaluation unit (4) facing sides of the holder (2b).

6. Encoder (1) according to claim 5, **characterized in that** the measuring scale (9) is formed from the first element (5a) of the power generating unit (5).

7. Encoder (1) according to at least one of the preceding claims, **characterized in that** the signal detection unit (3) consists of at least one magnetic field sensor (8) and / or of conducting paths of the printed circuit board (4a), wherein the conducting paths comprise interaction with the the first element (5a) of the energy generating unit (5).

8. Encoder (1) according to at least one of the preceding claims, **characterized in that** the second element (5b) is applied to the energy generating unit (5) is arranged on a support (10) on a first side, the support constitutes a magnetic feedback and which is connected with the circuit board (4a) and is arranged on a flex connector (7) on a second side opposite to the first side, and wherein the flexible connector (7) is electrically connected to the printed circuit board (4a) and serves as a circuit carrier for the second element (5b).

9. Encoder (1) according to claim 7 or 8, **characterized in that** the magnetic field sensor (8) and the measuring scale (9) are arranged in alignment to a central axis (A) of the shaft (W) and the first and second elements (5a, 5b) of the power generating unit (5) are arranged with a radial distance to the central axis (A).

10. Encoder (1) according to at least one of the preceding claims, **characterized in that** the signal evaluation unit (4) comprises a rectifying circuit for rectifying an AC voltage generated by the energy generating unit (5), and comprises an energy storage device for storing electrical energy generated by the energy generating unit (5).

11. Encoder (1) according to at least one of the preceding claims, **characterized in that** the signal evaluation unit (4) comprises a status monitoring unit and a communication unit which is in particular wireless, in order to communicate data detected by the signal detection unit (3) to a controller.

12. Encoder (1) according to at least one of the preceding claims, **characterized in that** the signal generator unit (2) comprises a transmission (11) fixed on the shaft (W), and the first element (5a) of the power generating unit (5) is mounted to a transmission element , in particular a planetary carrier (11 c) of the transmission (11), so that the first element (5a) of the power generating unit (5) is attached to the transmission element and is arranged opposite of the second element (5b) of the power generating unit (5).

## Revendications

1. Codeur (1) pour détecter des informations d'un arbre rotatif (W) avec une unité de générateur de signal (2) qui est fixée à l'arbre (W), une unité de détection de signal (3), qui est disposée dans la direction axiale de l'arbre (W) opposée à l'unité de générateur de signal (2), une unité d'évaluation de signal (4) comportant une carte de circuit imprimé (4a) espacées dans le sens axial à l'arbre (W), et une unité de génération de puissance (5) pour générer l'énergie électrique pour l'encodeur rotatif (1), dans lequel l'unité de génération de puissance (5) est constituée d'un premier élément (5a) disposé à l'unité d'émission de signal (2) et un deuxième élément (5b) disposé sur la carte de circuit (4a) de l'unité d'évaluation de signal (4), et dans lequel le premier et deuxième élément (5a, 5b) sont disposés d'en face de l'autre, **caractérisé en ce que** le premier élément (5a) de l'unité de génération de puissance (5) comprend au moins un élément magnétique aimanté axiale multipolaire des deux côtés ou multipolaire d'un côté (2a), et que le second élément (5b) de l'unité de génération de puissance (5) se compose de plusieurs bobines (6), qui sont disposés de telle sorte que dans chaque cas deux ou plusieurs bobines (6) sont décalés d'un pas polaire ou d'un multiple d'un pas polaire, et **en ce que** les bobines (6) sont connectés en série, en parallèle ou en groupes, et **en ce que** les bobines (6) sont orientés perpendiculairement à la carte à circuit imprimé (4a).

2. Codeur (1) selon la revendication 1, **caractérisé en ce que** l'élément magnétique (2a) est formé comme un aimant annulaire, un disque magnétique ou une pluralité d'aimants individuels de polarité alternée.

3. Codeur (1) selon au moins l'une des revendications précédentes, **caractérisé en ce que** le deuxième élément (5b) de l'unité de génération de puissance (5) est constitué d'au moins d'une bobine (6), qui est formée en modèle SMD ou la forme d'une bobine plane, en particulier comme une bobine plane à plusieurs couches, dans lequel la bobine (6) est équipée sur la carte de circuit imprimé (4a) ou intégralement incorporé dans la carte de circuit imprimé (4a).

4. Codeur (1) selon la revendication 3, **caractérisé en ce que** la bobine multicouche plane particulier est directement intégrée dans la carte de circuit imprimé (4), et dans laquelle les couches de matériau de ferrite sont intégrées dans la carte de circuit imprimé (4) et / ou les surfaces de cuivre sont introduites autour de la bobine plane.

5. Codeur (1) selon au moins l'une des revendications précédentes, **caractérisé en ce que** l'unité de générateur de signaux (2) comporte un détenteur (2b) fixé sur l'arbre (W) et une graduation de mesure (9) pouvant être scanné optique, capacitif ou inductif, dans lequel la graduation de mesure (9) est fixée sur une côté du détenteur se tournant vers l'unité d'évaluation de signal (4) se tournant vers le en regard du support (2b).

6. Codeur (1) selon la revendication 5, **caractérisé en ce que** la graduation de mesure (9) est formée du premier élément (5a) de l'unité de génération de puissance (5).

7. Codeur (1) selon au moins l'une des revendications précédentes, **caractérisé en ce que** l'unité de détection de signal (3) est constituée d'au moins un capteur de champ magnétique (8) et / ou de pistes conductrices de la carte de circuit imprimé (4a), dans lequel les pistes conductrices comprennent une interaction avec le premier élément (5a) de l'unité de génération d'énergie (5).

8. Codeur (1) selon au moins l'une des revendications précédentes, **caractérisé en ce que** le deuxième élément (5b) de l'unité de génération d'énergie (5) est disposé à un premier côté sur un support (10), le support constitue une contre-réaction magnétique et qui est relié à la carte de circuit (4a) et est disposé sur un connecteur flexible (7) sur un second côté opposé au premier côté, et dans lequel le connecteur flexible (7) est relié électriquement au circuit imprimé bord (4a) et sert comme support de circuit pour le second élément (5b).

9. Codeur (1) selon la revendication 7 ou 8, **caractérisé en ce que** le capteur de champ magnétique (8) et la graduation de mesure (9) sont disposés en alignement à un axe central (A) de l'arbre (W) et le premier et deuxième élément (5a, 5b) de l'unité de génération de puissance (5) sont disposés avec une distance radiale à l'axe central (A).

10. Codeur (1) selon au moins l'une des revendications précédentes, **caractérisé en ce que** l'unité d'évaluation de signal (4) comprend un circuit de redressement pour redresser une tension alternative générée par l'unité de génération d'énergie (5), et comprend un accumulateur d'énergie dispositif pour stocker de l'énergie électrique générée par l'unité de génération d'énergie (5).

11. Codeur (1) selon au moins l'une des revendications précédentes, **caractérisé en ce que** l'unité d'évaluation de signal (4) comprend une unité de surveillance d'état et une unité de communication qui est en particulier sans fil, pour communiquer les données détectées par le signal de l'unité de détection (3) à un contrôleur.

12. Codeur (1) selon au moins l'une des revendications précédentes, **caractérisé en ce que** l'unité de générateur de signal (2) comprend une transmission (11) fixée sur l'arbre (W), et le premier élément (5a) de la puissance unité de génération (5) est monté sur un élément de transmission, en particulier un porte-satellites (11 c) de la transmission (11), de sorte que le premier élément (5a) de l'unité de génération de puissance (5) est fixé à l'élément de transmission et est disposé en face du deuxième élément (5b) de l'unité de génération de puissance (5).
